# FASCICULE DE BREVET EUROPEEN

(11) **EP 4 565 845 B1**
(45) Date de publication et mention de la délivrance du brevet: **26.08.2026**
(21) Numéro de dépôt: 23749108.9
(22) Date de dépôt: 03.08.2023
(51) Int. Cl.: G01C 19/38, G01C 25/00

(54) **PROCÉDÉ D'ESTIMATION DE L'AZIMUT POUR MISE AU NORD D'UN SIMULATEUR DE MOUVEMENTS COMPORTANT AU MOINS DEUX AXES**
VERFAHREN ZUR AZIMUTSCHÄTZUNG EINES BEWEGUNGSSIMULATORS MIT MINDESTENS ZWEI ACHSEN ZUR EINSTELLUNG AUF NORD
METHOD FOR ESTIMATING THE AZIMUTH OF A MOTION SIMULATOR COMPRISING AT LEAST TWO AXES, IN ORDER TO SET IT TO NORTH

(30) Priorité: 04.08.2022 FR 2208105
(43) Date de publication de la demande: 11.06.2025
(73) Titulaire: EXAIL, 78100 Saint-Germain-en-Laye (FR)
(72) Inventeur: BUSSUTIL, Mehdi, 78100 SAINT-GERMAIN-EN-LAYE (FR); VAU, Bernard, 78100 SAINT-GERMAIN-EN-LAYE (FR)
(74) Mandataire: Jacobacci & Partners France
(86) Numéro de dépôt international: PCT/EP2023/071545
(87) Numéro de publication internationale: WO 2024/028437

(56) Documents cités:
- EP-A1- 2 410 293
- CN-A- 110 501 028
- ZHANG YONGJIAN ET AL: "Detection methods of earth's rotation rate with a MEMS gyroscope", 2015 12TH IEEE INTERNATIONAL CONFERENCE ON ELECTRONIC MEASUREMENT & INSTRUMENTS (ICEMI), IEEE, vol. 3, 16 July 2015 (2015-07-16), pages 1552 - 1557, XP032913378, DOI: 10.1109/ICEMI.2015.7494470

## Description

### Domaine technique

La présente invention concerne de manière générale le domaine des dispositifs de métrologie et plus particulièrement le domaine des moyens permettant de déterminer précisément l'azimut d'un simulateur de mouvements pour, en particulier, l'orienter précisément. Elle concerne plus spécifiquement un procédé d'estimation de l'azimut permettant notamment de réaliser une mise au nord d'un simulateur de mouvements comportant au moins deux axes.

### Arrière-plan technologique

La présente invention concerne donc le domaine des simulateurs de mouvements employés pour le test et la calibration des centrales inertielles, des centrales de navigation ou, plus généralement, des composants ou systèmes inertiels. Ces simulateurs de mouvements sont des systèmes électromécaniques comprenant un ou plusieurs axes généralement rotatifs imbriqués les uns dans les autres dans une structure de type cardan et permettant une mise en mouvement d'un plateau. Les tests et la calibration des centrales inertielles et des centrales de navigation requièrent l'usage d'un simulateur de mouvements comprenant au moins deux axes, la centrale testée étant fixée sur le plateau.

Pour la calibration des composants et systèmes inertiels, il est de la plus grande importance que l'azimut du repère associé à la base du simulateur de mouvements soit connu avec une grande précision (quelques secondes d'arc). La référence utilisée pour déterminer l'angle d'azimut est typiquement le nord et la connaissance de l'azimut peut directement permettre une « mise au nord » du simulateur de mouvements.

Aussi, en général, lors de l'installation sur site d'un simulateur de mouvements, l'un des axes de sa base est orienté de façon précise en direction du nord le plus souvent ou de l'est dans d'autres cas. Cette « mise au nord » du simulateur est souvent réalisée par un prestataire indépendant du fabricant du simulateur de mouvements, car elle requiert l'utilisation d'un gyro-théodolite homologué, de grande précision. Cette opération est coûteuse pour le fabricant du simulateur de mouvements, et le rend dépendant d'un organisme externe.

Afin de remédier à ces difficultés, on propose ici une méthode d'estimation de l'azimut de la base du simulateur de mouvements par utilisation uniquement d'une centrale inertielle ou de navigation posée et fixée temporairement sur le plateau du simulateur de mouvements, et donc en s'affranchissant du recours au gyro-théodolite indispensable dans les procédures classiques de « mise au nord ».

On rappelle que les gyromètres, en particulier ceux d'une centrale inertielle ou de navigation, mesurent une vitesse de rotation dans un repère galiléen et de ce fait sont sensibles à l'effet de la rotation de la terre. Les centrales de navigation comportent un récepteur GNSS en plus des gyromètres par rapport aux centrales inertielles qui ne comportent que les gyromètres.

On sait que les bons gyromètres de centrales de navigation actuelles possèdent un biais relativement faible dont la valeur est au plus de quelques centaines, voire quelques millièmes de degrés par heures (°/h). Ainsi, au moyen d'un trièdre de gyromètres d'une centrale inertielle ou de navigation, il est possible d'estimer relativement précisément la direction de l'axe de rotation de la terre par rapport aux axes dudit trièdre, et cette propriété est exploitée dans les chercheurs de nord. A ce sujet on peut se reporter par exemple à l'ouvrage « Strapdown inertial navigation technology » de D.H. Titterton et J.L. Watson (Peter Peregrinus, 1997, chap.9). On peut aussi se reporter par exemple à « The usage of Gyros in north finding systems » de Q. Le Gall, rapport KTH, 2017 (http://www.diva-portal.se/smash/get/diva2:1110826/FULLTEXT01.pdf).

Aussi, comme les positions angulaires des axes du simulateur de mouvements sont connues avec une grande précision (de l'ordre de l'arc seconde), on conçoit qu'il soit possible d'utiliser une centrale de navigation montée sur son plateau afin d'effectuer une recherche de nord, et ainsi de déterminer l'azimut de la base du simulateur de mouvements.

Les deux techniques les plus répandues pour la recherche de nord avec utilisation de gyromètres, sont le « Carouseling » et le « Maytagging », et on peut se référer à ce sujet à l'article « What is Mems gyrocompassing ? Comparative analysis of Maytagging and Carouseling » dont les auteurs sont I.P. Prikhodko, S.A. Zotov, A. Trusov, A.M. Shkel in Journal of Mircoelectromechanical systems, vol.12, n°6, 2013. La procédure de « maytagging » (parfois aussi appelée « Lasy Suzan ») est une détection d'azimut consistant à effectuer des acquisitions de mesures pendant des poses successives d'un gyromètre dont l'axe de mesure, encore dit axe sensible, est sensiblement horizontal, la direction de l'axe de mesure du gyromètre étant changée de 180° autour d'un axe vertical entre deux poses, ce qui permet d'annuler l'effet du biais du gyromètre sur l'estimation de l'azimut, par différentiation des mesures. Pendant les poses, le plateau est statique, l'axe sensible du gyromètre est horizontal et des mesures sont effectuées par le gyromètre. Cette méthode connue permet, la plupart du temps, d'obtenir une estimation de l'azimut avec une précision de l'ordre de quelques minutes d'arc. Toutefois, cette précision n'est pas suffisante dans le cadre de la mise au nord des simulateurs de mouvements où une précision de l'azimut de l'ordre de 10 à 15 secondes d'arc est généralement requise. Dans ce domaine, on connait aussi les documents suivants : ZHANG YONGJIAN ET AL: "Détection methods of earth's rotation rate with a MEMS gyroscope", 2015 12TH IEEE INTERNATIONAL CONFERENCE ON ELECTRONIC MEASUREMENT & INSTRUMENTS (ICEMI), IEEE, vol. 3, 16 juillet 2015, pages 1552-1557; CN 110 501 028 A et EP 2 410 293 A1. Exposé de l'invention

L'objet de la présente invention est de proposer une procédure améliorée d'estimation de l'azimut de la base d'un simulateur de mouvements ayant au moins deux axes, par l'utilisation des mesures issues d'un trièdre de gyromètres d'une centrale inertielle ou de navigation posée et fixée temporairement sur le plateau du simulateur de mouvements, et qui est un perfectionnement de la méthode de « maytagging ». On verra que dans des variantes de mise en œuvre un seul gyromètre ou deux gyromètres peuvent être utilisés.

Cette procédure améliorée tire parti, de façon optimisée, de deux avantages concourant à augmenter sensiblement la précision de l'estimation d'azimut :
1) Le fait de pouvoir orienter les gyromètres suivant deux degrés de liberté en rotation permet de diversifier les poses par rapport à la procédure classique de « maytagging »,
2) Le fait d'utiliser plusieurs gyromètres permet également d'améliorer la précision de l'estimation de l'azimut du simulateur de mouvements

L'invention concerne donc un procédé d'estimation de l'azimut, *ψ̂*, d'une base d'un simulateur de mouvements comportant un plateau monté sur la base pour tourner autour d'au moins deux axes perpendiculaires entre eux, le plateau ayant une face de référence plane définissant un plan de plateau, dans lequel
on fixe sur la face de référence du plateau un système gyrométrique comportant au moins un gyromètre adapté à mesurer une vitesse angulaire de rotation du plateau autour de son axe de mesure dans un référentiel inertiel,
on effectue au moins quatre sessions de mesures de la vitesse angulaire de rotation du plateau au cours d'au moins quatre poses du plateau dans quatre positions différentes du plateau lors d'une première séquence principale et dans quatre positions de plateau lors d'une seconde séquence principale, le plateau étant statique pendant ses poses et l'axe de mesure du gyromètre étant horizontal pendant les poses du plateau,
dans la première séquence principale, le plateau est positionné afin que, lors des poses du plateau, la face de référence soit orientée suivant un premier vecteur normal et on effectue successivement les mesures dans les quatre positions de pose successives du plateau,
dans la seconde séquence principale, le plateau est positionné afin que lors des poses du plateau, la face de référence soit orientée suivant un second vecteur normal opposé au premier vecteur normal, et on effectue successivement les sessions de mesures dans les quatre positions de pose successives du plateau,
les quatre positions de plateau de chacune des première et seconde séquences principales étant telles que l'axe de mesure horizontal du gyromètre est tourné d'un angle de 180° en valeur absolue entre une première position et une deuxième position, est tourné d'un angle de 90° en valeur absolue entre la deuxième position et une troisième position, est tourné d'un angle de 180° en valeur absolue entre la troisième position et une quatrième position,
les sessions de mesures pendant chacune des poses du plateau à chacune des quatre positions de plateau étant effectuées pendant sensiblement un même temps de pose *τ* déterminé inférieur ou égal à la moitié du temps de corrélation de la courbe d'Allan du gyromètre, et on moyenne les mesures obtenues pendant ce temps de pose pour obtenir une mesure de session moyennée,
dans chacune des première et seconde séquences principales, on calcule deux différentielles des mesures de session moyennées, dont une première différentielle entre la mesure de session moyennée à la première position et la mesure de session moyennée à la deuxième position et une seconde différentielle entre la mesure de session moyennée à la troisième position et la mesure de session moyennée à la quatrième position,
on répète un nombre *N* déterminé de fois chacune des première et seconde séquences principales, *N* >1, et on calcule des moyennes générales des différentielles obtenues par la répétition des première et seconde séquences principales, l'azimut étant finalement estimé par résolution d'un système linéaire comportant les moyennes générales des différentielles.

Plus généralement et en alternative, on peut mettre en œuvre l'invention de façon que les sessions de mesures pendant chacune des poses du plateau à chacune des quatre positions de plateau soient effectuées pendant sensiblement un même temps de pose *τ* déterminé inférieur au temps de corrélation de la courbe d'Allan du gyromètre, et on moyenne les mesures obtenues pendant ce temps de pose pour obtenir une mesure de session moyennée.

D'autres caractéristiques non limitatives et avantageuses du procédé conforme à l'invention, prises individuellement ou selon toutes les combinaisons techniquement possibles, sont les suivantes :
- le système gyrométrique est une centrale inertielle ou une centrale de navigation ou un ou plusieurs gyromètres indépendants,
- un gyromètre est spécifié par l'écart type des mesures en fonction de la durée des mesures, l'évolution de cet l'écart type (correspondant à l'« instabilité de biais » du gyromètre) présentant un minimum pour une durée de mesure dite « temps de corrélation de la courbe d'Allan »,
- dans le cadre de l'invention, on met en œuvre deux fois une procédure dérivée du « maytagging » à quatre positions pour deux orientations opposées du plateau, i.e. dans la première séquence principale la face de référence est orientée suivant un premier vecteur normal et dans la seconde séquence principale, la face de référence est orientée suivant un second vecteur normal opposé au premier vecteur normal,
- le système gyrométrique comporte au maximum trois gyromètres d'axes de mesure perpendiculaires entre eux,
- le système gyrométrique comporte un gyromètre unique, le gyromètre unique étant fixé sur la face de référence du plateau de manière à ce que son axe de mesure soit parallèle au plan du plateau, le plateau étant horizontal et statique pendant les poses du plateau dans les quatre positions de plateau de la première séquence principale et dans les quatre positions de plateau de la seconde séquence principale, les première et seconde directions d'orientation de la face de référence du plateau étant alors sur une verticale (i.e. la face de référence a un vecteur normal vertical mais les vecteurs normaux sont opposés entre les deux séquences principales),
- le système gyrométrique comporte plusieurs gyromètres d'axes de mesure perpendiculaires entre eux, dont au moins un gyromètre fixé sur le plateau de manière à ce que son axe de mesure soit parallèle au plan du plateau, pendant les poses du plateau dans les quatre positions de plateau de la première séquence principale et dans les quatre positions de plateau de la seconde séquence principale, le plateau étant horizontal, les première et seconde directions d'orientation de la face de référence étant alors sur une verticale (i.e. la face de référence a un vecteur normal vertical mais les vecteurs normaux sont opposés entre les deux séquences principales),
- le système gyrométrique comporte plusieurs gyromètres d'axes de mesure perpendiculaires entre eux, dont au moins deux gyromètres fixés sur le plateau de manière à ce que leurs axes de mesure soient parallèles au plan du plateau, pendant les poses du plateau dans les quatre positions de plateau de la première séquence principale et dans les quatre positions de plateau de la seconde séquence principale, le plateau étant horizontal, les première et seconde directions d'orientation de la face de référence étant alors sur une verticale (i.e. la face de référence a un vecteur normal vertical mais les vecteurs normaux sont opposés entre les deux séquences principales),
- le plateau du simulateur de mouvements est mobile selon au moins deux axes mobiles en rotation perpendiculaires entre eux,
- on fixe sur la face de référence du plateau le système gyrométrique,
- on fixe au centre de rotation de la face de référence du plateau le système gyrométrique, ledit centre de rotation correspondant au croisement d'un axe interne du simulateur de mouvements avec le plan du plateau,
- on fixe au centre de rotation de la face de référence du plateau ledit système gyrométrique, ledit centre de rotation correspondant au croisement desdits au moins deux axes mobiles en rotation perpendiculaires entre eux du simulateur de mouvements, dont un axe interne et un axe externe, autour desquels tourne le plateau,
- le plateau du simulateur de mouvements est mobile selon deux axes mobiles en rotation perpendiculaires entre eux, un axe interne et un axe externe,
- le plateau du simulateur de mouvements est mobile selon trois axes mobiles en rotation perpendiculaires entre eux, dont un axe interne et un axe externe,
- pendant la durée globale *T* des mesures, le système gyrométrique reste fixé sur le plateau,
- après l'estimation de l'azimut, le système gyrométrique est démonté du plateau,
- on met en œuvre un gyromètre unique ou plusieurs gyromètres dont un ensemble de gyromètres, les gyromètres ayant leurs axes de mesure perpendiculaires entre eux,
- on définit au préalable une durée globale maximum *Tmax* des mesures égal à une durée globale des mesures avec mise en œuvre de l'invention mais sans itération, *N* = 1, et avec un temps de pose *τ* égal au temps de corrélation de la courbe d'Allan et on détermine au moins une solution d'un couple temps de pose *τ* et nombre d'itérations *N* tel que le temps de pose *τ* est inférieur ou égal à la moitié du temps de corrélation de la courbe d'Allan, et tel que *N* >1 et tel qu'il permette d'avoir une durée globale des mesures *T* inférieure à la durée globale maximum *Tmax* ,
- on définit au préalable une durée globale maximum *Tmax* des mesures égal à une durée globale des mesures avec mise en œuvre de l'invention mais sans itération, *N* = 1, et avec un temps de pose *τ* égal au temps de corrélation de la courbe d'Allan et on détermine au moins une solution d'un couple temps de pose *τ* et nombre d'itérations *N* tel que le temps de pose *τ* est avantageusement inférieur ou égal au dixième du temps de corrélation de la courbe d'Allan, et tel que *N* >1 et tel qu'il permette d'avoir une durée globale des mesures *T* inférieure à la durée globale maximum *Tmax* ,
- on détermine plusieurs couples temps de pose *τ* et nombre d'itérations *N* et on met en œuvre celui dont le temps de pose *τ* est le plus petit,
- on détermine plusieurs couples temps de pose *τ* et nombre d'itérations *N* et on met en œuvre celui dont le nombre d'itérations *N* >1 est le plus grand,
- on détermine plusieurs couples temps de pose *τ* et nombre d'itérations *N* et on met en œuvre celui dont le temps de pose *τ* est le plus grand et inférieur ou égal à la moitié du temps de corrélation de la courbe d'Allan,
- on détermine plusieurs couples temps de pose *τ* et nombre d'itérations *N* et on met en œuvre celui dont le temps de pose *τ* est le plus grand et inférieur ou égal au dixième du temps de corrélation de la courbe d'Allan,
- on détermine plusieurs couples temps de pose *τ* et nombre d'itérations *N* et on met en œuvre celui dont le nombre d'itérations *N* >1 est le plus petit,
- on détermine plusieurs couples temps de pose *τ* et nombre d'itérations *N* et on met en œuvre celui qui permet d'avoir une durée globale des mesures *T* la plus petite, la durée globale des mesures *T* étant calculée par le produit de *τ* par *N,* le temps de positionnement et d'orientation du plateau étant négligé par rapport au temps de pose *τ* utilisé qui est inférieur ou égal à la moitié du temps de corrélation de la courbe d'Allan,
- on détermine plusieurs couples temps de pose *τ* et nombre d'itérations *N* et on met en œuvre celui qui permet d'avoir une durée globale des mesures *T* la plus petite, la durée globale des mesures *T* étant calculée par le produit de *τ* par *N* et en tenant compte des temps de positionnement et d'orientation du plateau,
- le temps de pose *τ* est supérieur au temps de passage entre deux positions successives tournées d'un angle de 180° dans une séquence principale à quatre positions,
- le temps de pose est supérieur au temps de passage entre deux positions successives tournées d'un angle de 90° dans une séquence principale à quatre positions,
- le temps de pose est inférieur ou égal au dixième du temps de corrélation de la courbe d'Allan,
- le temps de pose est inférieur ou égal au vingtième du temps de corrélation de la courbe d'Allan,
- un seul gyromètre est mis en œuvre,
- on met en œuvre un ensemble de trois gyromètres ayant leurs axes de mesure perpendiculaires entre eux, l'ensemble de trois gyromètres étant une centrale inertielle ou de navigation et les trois gyromètres ont des temps de corrélation de la courbe d'Allan sensiblement identiques, les sessions de mesures étant effectuées pendant les poses du plateau par deux mêmes gyromètres qui ont leurs deux axes de mesure horizontaux pendant toutes les poses du plateau,
- la centrale inertielle ou de navigation est disposée sur le plateau afin que deux de ses trois gyromètres aient leurs axes de mesure parallèles au plan du plateau,
- dans le cas de la mise en œuvre d'une centrale inertielle ou de navigation, dans la première séquence principale, le plateau est positionné afin que l'axe de mesure non parallèle au plan du plateau soit dirigé vers le haut (i.e. la face de référence a un vecteur normal vertical pointant vers le haut), et vers le bas dans la seconde séquence principale,
- dans le cas de la mise en œuvre d'une centrale inertielle ou de navigation, dans la première séquence principale, le plateau est positionné afin que l'axe de mesure non parallèle au plan du plateau soit dirigé vers le bas (i.e. la face de référence a un vecteur normal vertical pointant vers le bas), et vers le haut dans la seconde séquence principale,
- on met en œuvre deux gyromètres ayant leurs axes de mesure perpendiculaires entre eux, les deux gyromètres étant fixés sur le plateau de manière que leurs axes de mesure soient horizontaux lors des poses du plateau et les deux gyromètres ont des temps de corrélation de la courbe d'Allan sensiblement identiques,
- on met en œuvre deux gyromètres ayant leurs axes de mesure parallèles au plan du plateau,
- on met en œuvre au moins deux gyromètres et les gyromètres utilisés pour les sessions de mesures lors des poses ont des temps de corrélation de la courbe d'Allan significativement différents entre eux, et on met en œuvre un temps de pose τ inférieur ou égal à la moitié de : la moyenne des temps de corrélation de la courbe d'Allan des gyromètres utilisés, ou la valeur minimale des temps de corrélation de la courbe d'Allan des gyromètres utilisés, ou la valeur maximale des temps de corrélation de la courbe d'Allan des gyromètres utilisés,
- on met en œuvre au moins deux gyromètres et les gyromètres utilisés pour les sessions de mesures lors des poses ont des temps de corrélation de la courbe d'Allan significativement différents entre eux, et on met en œuvre préférentiellement un temps de pose *τ* inférieur ou égal à la moitié de la valeur minimale des temps de corrélation de la courbe d'Allan des gyromètres utilisés,
- les première et seconde séquences principales sont répétées *N* fois séquentiellement, la première séquence principale étant répétée *N* fois puis la seconde séquence étant répétée *N* fois,
- les première et seconde séquences principales sont répétées *N* fois alternativement, par *N* répétitions d'une première séquence principale exécutée une fois suivie d'une seconde séquence exécutée une fois,
- les première et seconde séquences principales sont répétées *N* fois alternativement et séquentiellement en répétant *l* fois une première séquence principale exécutée *m* fois suivie d'une seconde séquence exécutée *m* fois, avec *m < N*, *l >* 1 et avec le produit de *l* par *m* égal à *N,*
- une fois que l'azimut de la base de la table, *ψ̂*, a été déterminé et pour une mise au nord de la base, on place sur la base du simulateur de mouvements au moins un miroir et on fait effectuer à la base dudit simulateur des rotations mécaniques afin de compenser l'angle *ψ̂*, lesdites rotations mécaniques étant contrôlées au moyen d'un auto-collimateur visant les miroirs précités.

### Brève description des dessins

[Fig. 1] représente une courbe d'Allan simulée d'un gyromètre,
[Fig. 2] représente un schéma des orientations de l'axe de mesure d'un gyromètre dans les quatre positions de plateau lors d'un « maytagging »,
[Fig. 3] représente un simulateur de mouvements avec un système gyrométrique fixé sur son plateau.

### Description détaillée d'un exemple de réalisation

La description détaillée qui va suivre en regard des dessins annexés, donnés à titre d'exemples non limitatifs, fera bien comprendre en quoi consiste l'invention et comment elle peut être réalisée.

Dans cette description, on considère un simulateur de mouvements comportant deux axes en rotation motorisés mais le procédé de l'invention peut s'appliquer à des simulateurs comprenant plus que deux axes en rotation motorisés par généralisation des opérations qui sont décrites.

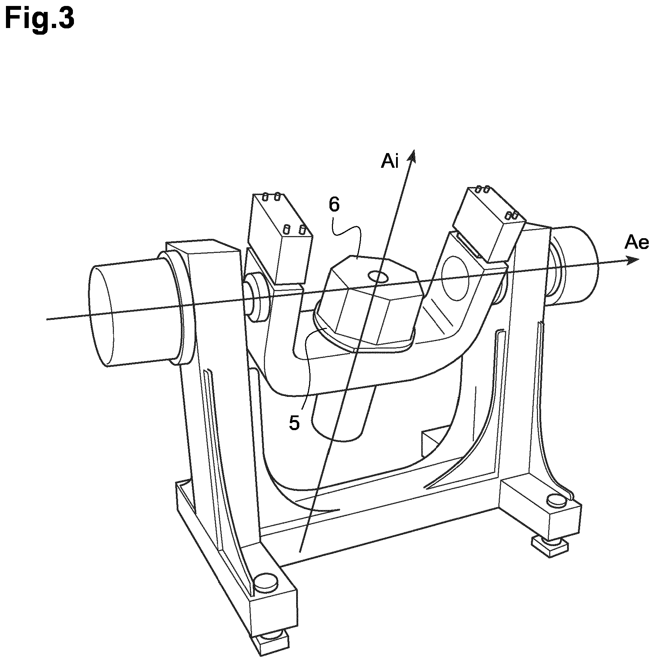

Pour cette description, on fait certaines hypothèses et on utilise des notations qui sont maintenant présentées en relation avec la figure 3 d'un exemple de simulateur de mouvements :
Le simulateur de mouvements comporte une base qui est fixe dans un repère géographique local 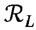 et un plateau 5 mobile autour d'un axe en rotation motorisé dit axe interne Ai, encore dit axe 1, *zₛ*, du simulateur. Le plateau 5 comporte une face de référence plane qui définit un plan de plateau sur lequel des appareils à tester peuvent être fixés. L'axe interne Ai du simulateur est orthogonal au plan du plateau comme on peut le voir sur la figure 3.

Typiquement, le simulateur de mouvements est disposé sur un support fixe par rapport au sol.

Dans la suite on utilisera indifféremment les termes « plateau » et « table » qui sont considérés équivalents.

Le repère géographique local 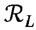 d'axes (*x*, *y*, *z*) est tel que l'axe *x* pointe vers le nord, l'axe *z* vers le haut, et l'axe *y* vers l'ouest.

Le repère attaché à la base du simulateur de mouvements 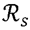 , d'axes *xₛ*, *yₛ*, *zₛ* dont l'axe *zₛ* pointe vers le haut.

On fait également l'hypothèse que l'autre axe en rotation motorisé, dit axe externe Ae, encore dit axe 2, du simulateur effectue une rotation suivant l'axe *xₛ* (mais ce pourrait parfaitement être l'axe *yₛ*). Le repère associé à l'axe externe du simulateur, l'axe 2, est noté 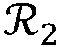 d'axes (*x*₂, *y*₂, *z*₂). La position angulaire de cet axe 2 est notée *θ*₂ et lorsque *θ*₂ = 0, *x₂* est colinéaire à *xₛ*, *y₂* est colinéaire à *yₛ*, *z*₂ est colinéaire à *zₛ*.

On fait en outre l'hypothèse que l'axe interne, axe 1, du simulateur de mouvements est aligné selon l'axe *z*₂. Le repère associé à l'axe interne, l'axe 1, est noté 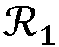 d'axes (*x*₁, *y*₁, *z*₁). La position angulaire de cet axe est notée *θ*₁ et lorsque *θ*₁ = 0, *x*₁ est colinéaire à *x*₂, *y*₁ est colinéaire à *y*₂, *z*₁ est colinéaire à *z*₂.

Une procédure similaire pourrait être envisagée dans le cas où l'axe externe effectuerait une rotation suivant l'axe *zₛ* et où l'axe interne effectuerait une rotation suivant l'axe *x₂* ou *y₂* : elle aboutirait à des calculs basiques différents que ceux décrits plus bas, mais on parviendrait au même résultat.

La centrale de navigation utilisée pour l'estimation et qui est posée sur la face de référence du plateau du simulateur de mouvements comporte des repères d'axes de mesure *x_{g}, y_{g}* et *z_{g}* de ses gyromètres. On peut, à la place d'une centrale de navigation, utiliser une centrale inertielle. La centrale de navigation est posée et fixée sur le plateau du simulateur de mouvements de telle sorte que son axe de mesure *z_{g}* soit colinéaire avec l'axe interne Ai, l'axe 1, *zₛ*, du simulateur. Là encore, cette hypothèse n'est pas restrictive.

En particulier, s'il est préférable que la/les colinéarités indiquées soit respectées, et donc aussi le centrage du gyromètre ou de la centrale de navigation sur le plateau, un éventuel mésalignement par rapport à l'horizontale d'un ou des deux axes de mesure/sensibles n'intervient qu'au second ordre dans les erreurs d'estimation. Par contre, il est important que le/les axes de mesure du/des gyromètres servant aux mesures pour l'estimation soient dans un plan horizontal pendant ces mesures/poses.

Dans le cadre de l'invention, il est possible de mettre en œuvre un seul gyromètre ou plusieurs gyromètres. Par exemple sur la figure 3, l'élément 6 fixé sur le plateau est une centrale de navigation comportant trois gyromètres et qui est fixée sur le plateau pendant l'estimation. Cette centrale est fixée au centre de rotation C du plateau 5 et avec un de ses axes de mesure qui est orthogonal à l'axe interne Ai. En alternative, il est possible de fixer sur le plateau une centrale inertielle. Dans les deux cas, centrale inertielle ou centrale de navigation, on utilise avantageusement deux axes de mesure/sensibles pour les calculs d'estimation comme décrit ci-après. En effet, le plateau est sensiblement plan et définit un plan de plateau orthogonal à l'axe interne, l'axe 1, *zₛ*, du simulateur (ou même l'axe 1, *zₛ*, porte le plan du plateau) et sur lequel plateau est fixée la centrale de navigation ou inertielle. Ainsi, de façon générale, les d'axes de mesure *x_{g}*, *y_{g}* des gyromètres de la centrale de navigation ou inertielle sont dans un plan parallèle au plan de plateau.

On verra en outre que dans le cas où un seul gyromètre est mis en œuvre dans le mode dit « dégradé » décrit plus loin, son axe de mesure est parallèle au plan de plateau.

A noter qu'on mentionne ici un plateau pour simplifier les explications mais cela peut être tout support mis en mouvement dans le simulateur de mouvements et servant à recevoir les équipements qui seront testés dans ce dernier.

On considère les notations suivantes :
*ψ* : azimut de la table : angle de l'axe *xₛ* du repère de la base de la table par rapport à l'axe x du repère géographique local.
*θ*₁, *θ*₂ : Position angulaire de l'axe 1 (axe interne) et 2 (axe externe) de la table, l'axe 1 tournant suivant l'axe *z*₂, et l'axe 2 tournant suivant l'axe *xₛ.*
Δ: défaut d'alignement (c-à-d. rotation suivant l'axe *z*₁) du gyromètre d'axe de mesure *x_{g}* par rapport au vecteur *x*₁.
*δ*: défaut d'orthogonalité du gyromètre d'axe de mesure *y_{g}* par rapport au gyromètre d'axe de mesure *x_{g}* suivant l'axe *z_{g}* du repère des axes de mesure associé au trièdre de gyromètres.
*L*: Latitude de l'emplacement du simulateur de mouvements sur la terre.
Ω: Vitesse de rotation de la terre.
*dₓ, d_{y}, d_{z}*: termes de perturbation sur les mesures des gyromètres d'axes de mesure *x_{g}, y_{g},* et *z_{g},* ces perturbations incluant le biais, les variations de biais et le bruit.
$\left(\begin{matrix}{ω}_{x} \left(t\right) \\ {ω}_{y} \left(t\right) \\ {ω}_{z} \left(t\right)\end{matrix}\right)$: vecteur de mesures des gyromètres de la centrale de navigation selon
les axes de mesure *x_{g}*, *y_{g}*, *z_{g}.*

On néglige les erreurs de facteur d'échelle, et de défaut d'orthogonalité des gyros, hormis celui du gyromètre d'axe de mesure *y_{g}* par rapport à celui d'axe *x_{g}* suivant l'axe *z_{g}*, noté *δ* (*cf. supra*)*.*

Lorsque les axes internes et externes de la table sont statiques, les mesures des gyromètres de la centrale de navigation sont données par la combinaison des matrices de rotation desdits axes et sous les hypothèses précédentes on obtient : $\begin{matrix}\left(\begin{matrix}{ω}_{x} \left(t\right) \\ {ω}_{y} \left(t\right) \\ {ω}_{z} \left(t\right)\end{matrix}\right) = \\ \left(\begin{matrix}1 & 0 & 0 \\ - δ & 1 & 0 \\ 0 & 0 & 1\end{matrix}\right) \left(\begin{matrix}c \left({θ}_{1}+Δ\right) & s \left({θ}_{1}+Δ\right) & 0 \\ - s \left({θ}_{1}+Δ\right) & c \left({θ}_{1}+Δ\right) & 0 \\ 0 & 0 & 1\end{matrix}\right) \left(\begin{matrix}{cθ}_{2} & 0 & - {sθ}_{2} \\ 0 & 1 & 0 \\ {sθ}_{2} & 0 & {cθ}_{2}\end{matrix}\right) \left(\begin{matrix}cψ & sψ & 0 \\ - sψ & cψ & 0 \\ 0 & 0 & 1\end{matrix}\right) \left(\begin{matrix}Ω cL \\ 0 \\ Ω sL\end{matrix}\right) + \\ \left(\begin{matrix}{d}_{x} \left(t\right) \\ {d}_{y} \left(t\right) \\ {d}_{z} \left(t\right)\end{matrix}\right)\end{matrix}$

On fait également l'hypothèse que les positions angulaires *θ*₁, *θ*₂ de la table sont parfaitement constantes, toutes les perturbations étant reportées sur les termes *dₓ*(*t*), *d_{y}*(*t*), *d_{z}*(*t*)*.*

Dans la suite, on présente une procédure d'estimation de l'azimut *ψ* par acquisition de mesures fournies par les gyromètres d'une centrale de navigation avec les gyromètres d'axes de mesure *x_{g}* et *y_{g}.* Ces axes de mesure *x_{g}* et *y_{g}* sont dans le plan ou parallèles au plan défini par le plateau et lorsque le plateau est horizontal, l'axe de mesure *z_{g}* est vertical. Les mesures selon l'axe de mesure *z_{g}* ne sont pas utiles dans cet exemple et on peut qualifier les gyromètres d'axes de mesure *x_{g}* et *y_{g}* de gyromètres utiles et de gyromètres utilisés (pour l'estimation de l'azimut). En pratique, étant donné que les axes de mesure des gyromètres sont perpendiculaires entre eux, et que les mesures doivent s'effectuer avec un même ou les mêmes gyromètres ayant chacun des axes de mesure horizontaux (donc dans un plan), il ne peut y avoir qu'un ou deux gyromètres utiles/utilisés.

Ces acquisitions sont subdivisées en deux sous-procédures et dans tous les cas elles sont effectuées lorsque le plateau est horizontal. Le simulateur de mouvement doit donc être positionné de manière que le plan du plateau soit horizontal (et donc l'/les axes de mesure des gyromètres soient horizontaux) pendant les mesures/poses. A cette fin, il est réalisé une calibration préalable grâce à des niveaux.

Les deux sous-procédures (ou séquences principales) sont :
1) Première sous-procédure encore dite première séquence principale : La centrale de navigation a son axe *z_{g}* vertical qui pointe vers le haut, ce qui correspond à la position *θ*₂ = 0 de l'axe 2 de la table, ce qui correspond à une première orientation horizontale de la table. Dans cette situation, les vitesses instantanées mesurées à l'instant *t* sur les axes de mesure *x_{g}* et *y_{g}* des gyromètres sont notées *ω*_{*x*0}(*t*), *ω*_{*y*0}(*t*)
2) Seconde sous-procédure encore dite seconde séquence principale : La centrale de navigation a son axe *z_{g}* vertical qui pointe vers le bas, ce qui correspond également à la position *θ*₂ = *π* de l'axe 2 de la table, ce qui correspond une seconde orientation horizontale de la table, de sens opposé à la première orientation de la table. Dans cette situation, les vitesses instantanées à l'instant *t*, sur les axes de mesure *x_{g}* et *y_{g}* des gyromètres sont notées : *ω_{xπ}*(*t*), *ω_{yπ}*(*t*)

Pour ce qui concerne le gyromètre de l'axe de mesure *x_{g}* de la centrale de navigation, on peut exprimer d'après la relation (1) ces vitesses instantanées en fonction, en particulier de *θ*₁ : $\begin{matrix} \\ \begin{matrix}\begin{matrix}{ω}_{x 0} \left(t, {θ}_{1}\right) = cos \left({θ}_{1}+Δ+ψ\right) Ω cosL + {d}_{x} \left(t\right) \\ = \left({cosθ}_{1} cos\left(Δ+ψ\right)-{sinθ}_{1} sin\left(Δ+ψ\right)\right) Ω cosL + {d}_{x} \left(t\right)\end{matrix} & \left(2\right) \\ \begin{matrix}{ω}_{xπ} \left(t, {θ}_{1}\right) = - cos \left({θ}_{1}+Δ-ψ\right) Ω cosL + {d}_{x} \left(t\right) \\ = \left(-{cosθ}_{1} cos\left(Δ-ψ\right)+{sinθ}_{1} sin\left(Δ-ψ\right)\right) Ω cosL + {d}_{x} \left(t\right)\end{matrix} & \left(3\right)\end{matrix}\end{matrix}$

De même pour les mesures du gyromètre d'axe de mesure *y_{g}* de la centrale de navigation : $\begin{matrix}\begin{matrix}{ω}_{y 0} \left(t, {θ}_{1}\right) = - sin \left({θ}_{1}+Δ+ψ+δ\right) Ω cosL + {d}_{y} \left(t\right) \\ = \left(-{cosθ}_{1} sin\left(Δ+ψ+δ\right)-sin {θ}_{1} cos\left(Δ+ψ+δ\right)\right) Ω cosL + {d}_{y} \left(t\right)\end{matrix} & \left(4\right) \\ \begin{matrix}{ω}_{yπ} \left(t, {θ}_{1}\right) = + sin \left({θ}_{1}+Δ-ψ+δ\right) Ω cosL + {d}_{y} \left(t\right) \\ = \left({cosθ}_{1} sin\left(Δ-ψ+δ\right)+{sinθ}_{1} cos\left(Δ-ψ+δ\right)\right) Ω cosL + {d}_{y} \left(t\right)\end{matrix} & \left(5\right)\end{matrix}$

### 1) Première sous-procédure : Série d'acquisitions pour θ₂ = 0

Les mesures avec *θ*₂ = 0 permettent d'avoir une estimée *χ̂*_{*x*0} = Δ̂ + *ψ̂* avec le gyromètre d'axe de mesure *x_{g}* de variance ${σ}_{x 0}^{2}$ et une estimée *χ̂*_{*y*0} = Δ̂ + *ψ̂* + *δ̂* avec le gyromètre d'axe de mesure *y_{g}*, de variance ${σ}_{y 0}^{2}$. Dans cet exemple, l'orientation du plateau avec *θ*₂ = 0 correspond à un plateau horizontal regardant vers le haut (i.e. la face de référence a un vecteur normal vertical pointant vers le haut, un vecteur normal étant un vecteur perpendiculaire à une surface, en l'espèce la face de référence) et alors l'orientation du plateau avec *θ*₂ = *π* (voir ci-après) correspond à un plateau horizontal regardant vers le bas. Dans un autre exemple de mise en œuvre, l'orientation du plateau avec *θ*₂ = 0 correspond à un plateau horizontal regardant vers le bas et alors l'orientation du plateau avec *θ*₂ = *π* correspond à un plateau horizontal regardant vers le haut.

Les paramètres *χ̂*_{*x*0}, *χ̂*_{*y*0} sont estimés par une méthode dérivée du « maytagging » à quatre positions.

On définit pour cela une position initiale de l'axe 1 notée *θ*₁₍₀₎, dite première position de mesure, et on fait une acquisition, pendant un temps *τ* correspondant à une pose, de mesures des gyromètres d'axes de mesure *x_{g}* et *y_{g}* à cette position et correspondant à une session de mesures. Le temps *τ* peut donc être qualifié de temps de pose. Les moyennes des mesures pendant le temps de pose sur ces gyromètres d'axes de mesure *x_{g}* et *y_{g}* sont calculées et notées *ω̅*_{*x*0}(*θ*₁₍₀₎) *ω̅*_{*y*0}(*θ*₁₍₀₎). Ainsi, pendant une pose correspondant à une acquisition, pour chaque gyromètre utile, plusieurs mesures sont effectuées et on moyenne ces mesures pour obtenir une moyenne sur une pose.

Après quoi on fait subir à l'axe 1 une rotation de *π* radians pour passer à une seconde position de mesure, et on recommence une acquisition durant, de préférence, le même temps de pose *τ*, ce qui permet de calculer et obtenir les moyennes d'une pose notées *ω̅*_{*x*0}(*θ*₁₍₀₎ + *π*) et *ω̅*_{*y*0}(*θ*₁₍₀₎ + *π*).

On calcule ensuite pour chaque gyromètre d'axes de mesure *x_{g}* et *y_{g}* une différentielle $\begin{matrix}{\overline{\overline{ω}}}_{x 0} \left({θ}_{1 \left(0\right)}\right) et {\overline{\overline{ω}}}_{y 0} \left({θ}_{1 \left(0\right)}\right) telles que \\ {\overline{\overline{ω}}}_{x 0} \left({θ}_{1 \left(0\right)}\right) = \frac{1}{2} \left({\overline{ω}}_{x 0}\left({θ}_{1 \left(0\right)}\right)-{\overline{ω}}_{x 0}\left({θ}_{1 \left(0\right)}+π\right)\right)\end{matrix}$ et ${\overline{\overline{ω}}}_{y 0} \left({θ}_{1 \left(0\right)}\right) = \frac{1}{2} \left({\overline{ω}}_{y 0}\left({θ}_{1 \left(0\right)}\right)-{\overline{ω}}_{y 0}\left({θ}_{1 \left(0\right)}+π\right)\right)$

Cette différentiation est le « maytagging » proprement dit.

Par la suite, on place l'axe 1 de la table à la position *θ*₁₍₀₎ + *φ*, dite troisième position de mesure, avec de préférence $φ = \frac{π}{2}$ ou $φ = - \frac{π}{2}$ et l'on fait une acquisition des mesures des gyromètres d'axes de mesure *x_{g}* et *y_{g}* de préférence durant le même temps de pose *τ*, et qu'on moyenne de façon à obtenir les valeurs moyennes d'une pose *ω̅*_{*x*0}(*θ*₁₍₀₎ + *φ*) et *ω̅*_{*y*0}(*θ*₁₍₀₎ + φ).

On peut noter que ces valeurs $φ = \frac{π}{2}$ ou $φ = - \frac{π}{2}$ sont optimales par rapport à d'autres valeurs.

On va ensuite déplacer l'axe 1 de la table à la position *θ*₁₍₀₎ + *φ* + *π* à une quatrième position de mesure et l'on fait à nouveau une acquisition des mesures des gyromètres d'axes de mesure *x_{g}* et *y_{g}* de préférences durant le même temps de pose *τ*, puis l'on moyenne ces acquisitions de façon à obtenir les valeurs moyennes d'une pose sur les gyromètres *x_{g}* et *y_{g}* notées *ω̅*_{*x*0}(*θ*₁₍₀₎ + *φ* + *π*) et *ω̅*_{*y*0}(*θ*₁₍₀₎ + *φ + π*).

A noter que les quatre positions de l'axe 1 définissent quatre positions de la table et aussi quatre positions des axes de mesure *x_{g}, y_{g}*, et *z_{g},* du fait que la centrale inertielle est fixée sur la table.

On calcule ensuite les différentielles ${\overline{\overline{ω}}}_{x 0} \left({θ}_{1 \left(0\right)}+φ\right)$ et ${\overline{\overline{ω}}}_{y 0} \left({θ}_{1 \left(0\right)}+φ\right)$ telles que ${\overline{\overline{ω}}}_{x 0} \left({θ}_{1 \left(0\right)}+φ\right) = \frac{1}{2} \left({\overline{ω}}_{x 0}\left({θ}_{1 \left(0\right)}+φ\right)-{\overline{ω}}_{x 0}\left({θ}_{1 \left(0\right)}+π+φ\right)\right)$ et ${\overline{\overline{ω}}}_{y 0} \left({θ}_{1 \left(0\right)}+φ\right) = \frac{1}{2} \left({\overline{ω}}_{y 0}\left({θ}_{1 \left(0\right)}+φ\right)-{\overline{ω}}_{y 0}\left({θ}_{1 \left(0\right)}+π+φ\right)\right)$

Suite à une séquence d'acquisitions sur 4 positions on dispose donc de deux différentielles par axe de mesure, ce qui fait quatre différentielles pour les deux axes de mesure *x_{g}* et *y_{g}.*

En pratique, cette séquence d'acquisitions sur 4 positions (*θ*₁₍₀₎, *θ*₁₍₀₎ + π, *θ*₁₍₀₎ + *φ, θ*₁₍₀₎ + *φ* + *π* ) est itérée/renouvelée *N* fois, permettant de déterminer à chaque itération les différentielles sur chaque pose : ${\overline{\overline{ω}}}_{x 0}^{\left(i\right)} \left({θ}_{1 \left(0\right)}\right)$ ${\overline{\overline{ω}}}_{x 0}^{\left(i\right)} \left({θ}_{1 \left(0\right)}+φ\right)$ ${\overline{\overline{ω}}}_{y 0}^{\left(i\right)} \left({θ}_{1 \left(0\right)}\right)$ ${\overline{\overline{ω}}}_{y 0}^{\left(i\right)} \left({θ}_{1 \left(0\right)}+φ\right)$

L'indice (*i*) se rapportant à l'ième itération des *N* itérations.

A l'issue des *N* itérations (chaque itération rappelons le, étant constitué de 4 séquences de pose sur les 4 positions (*θ*₁₍₀₎, *θ*₁₍₀₎ + *π*, *θ*₁₍₀₎ + *φ*, *θ*₁₍₀₎ + *φ* + *π* ), on calcule des moyennes générales des différentielles : ${\overline{\overline{\overline{ω}}}}_{x 0} \left({θ}_{1 \left(0\right)}\right) = \frac{1}{N} {\sum }_{i = 1}^{N} {\overline{\overline{ω}}}_{x 0}^{\left(i\right)} \left({θ}_{1 \left(0\right)}\right)$ ${\overline{\overline{\overline{ω}}}}_{x 0} \left({θ}_{1 \left(0\right)}+φ\right) = \frac{1}{N} {\sum }_{i = 1}^{N} {\overline{\overline{ω}}}_{x 0}^{\left(i\right)} \left({θ}_{1 \left(0\right)}+φ\right)$ ${\overline{\overline{\overline{ω}}}}_{y 0} \left({θ}_{1 \left(0\right)}\right) = \frac{1}{N} {\sum }_{i = 1}^{N} {\overline{\overline{ω}}}_{y 0}^{\left(i\right)} \left({θ}_{1 \left(0\right)}\right)$ ${\overline{\overline{\overline{ω}}}}_{y 0} \left({θ}_{1 \left(0\right)}+φ\right) = \frac{1}{N} {\sum }_{i = 1}^{N} {\overline{\overline{ω}}}_{y 0}^{\left(i\right)} \left({θ}_{1 \left(0\right)}+φ\right)$

Ensuite, compte tenu de la relation (2), on peut écrire : ${\overline{\overline{\overline{ω}}}}_{x 0} \left({θ}_{1 \left(0\right)}\right) = \left[cos\left({θ}_{1 \left(0\right)}\right)cos\left({\hat{χ}}_{x 0}\right)-sin\left({θ}_{1 \left(0\right)}\right)sin\left({\hat{χ}}_{x 0}\right)\right] Ω cosL + {ϵ}_{x 0}$ ${\overline{\overline{\overline{ω}}}}_{x 0} \left({θ}_{1 \left(0\right)}+φ\right) = \left[cos\left({θ}_{1 \left(0\right)}+φ\right)cos\left({\hat{χ}}_{x 0}\right)-sin\left({θ}_{1 \left(0\right)}+φ\right)sin\left({\hat{χ}}_{x 0}\right)\right] Ω cosL + ϵ {′}_{x 0}$

Où *εₓ* et *ε'ₓ* sont des termes d'erreur.

Dans ce document le symbole $\hat{\left(.\right)}$ indique l'estimée de la variable entre parenthèse. Les relations (14) et (15) permettent ainsi de déterminer les estimées sin(χ̂_{*x*0}), et cos (*χ̂*_{*x*0}) par résolution du système linéaire : $\left[\begin{matrix}cos \left({\hat{χ}}_{x 0}\right) \\ sin \left({\hat{χ}}_{x 0}\right)\end{matrix}\right] = {\left[\begin{matrix}cos \left({θ}_{1 \left(0\right)}\right) & - sin \left({θ}_{1 \left(0\right)}\right) \\ cos \left({θ}_{1 \left(0\right)}+φ\right) & - sin \left({θ}_{1 \left(0\right)}+φ\right)\end{matrix}\right]}^{- 1} \left[\begin{matrix}{\overline{\overline{\overline{ω}}}}_{x 0} \left({θ}_{1 \left(0\right)}\right) \\ {\overline{\overline{\overline{ω}}}}_{x 0} \left({θ}_{1 \left(0\right)}+φ\right)\end{matrix}\right]$

Et donc l'angle *χ̂*_{*x*0} = Δ̂ + *ψ̂* peut être déterminé à partir de sin(*χ̂*_{*x*0}) et cos (*χ̂*_{*x*0}) par utilisation d'une fonction arc tangente (ou mieux atan2) puisque $tan {\hat{χ}}_{x 0} = \frac{sin \left({\hat{χ}}_{x 0}\right)}{cos \left({\hat{χ}}_{x 0}\right)}$ 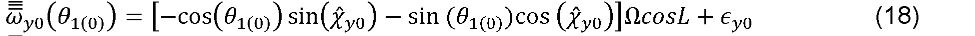 ${\overline{\overline{\overline{ω}}}}_{y 0} \left({θ}_{1 \left(0\right)}+φ\right) = \left[-cos\left({θ}_{1 \left(0\right)}+φ\right)sin\left({\hat{χ}}_{y 0}\right)-sin\left({θ}_{1 \left(0\right)}+φ\right)cos\left({\hat{χ}}_{y 0}\right)\right] Ω cosL + ϵ {′}_{y 0}$

Et de même $\left[\begin{matrix}sin \left({\hat{χ}}_{y 0}\right) \\ cos \left({\hat{χ}}_{y 0}\right)\end{matrix}\right] = \frac{- 1}{Ω cosL} {\left[\begin{matrix}cos \left({θ}_{1 \left(0\right)}\right) & sin \left({θ}_{1 \left(0\right)}\right) \\ cos \left({θ}_{1 \left(0\right)}+φ\right) & sin \left({θ}_{1 \left(0\right)}+φ\right)\end{matrix}\right]}^{- 1} \left[\begin{matrix}{\overline{\overline{\overline{ω}}}}_{y 0} \left({θ}_{1 \left(0\right)}\right) \\ {\overline{\overline{\overline{ω}}}}_{y 0} \left({θ}_{1 \left(0\right)}+φ\right)\end{matrix}\right]$

Ce qui permet de déduire *χ̂*_{*y*0} = Δ̂ + *ψ̂* + *δ̂*.

Ainsi à l'issue de la première sous-procédure où l'axe *z_{g}* de la centrale de navigation est maintenu vertical, pointant vers le haut, on a estimé *χ̂*_{*x*0} = Δ̂ + *ψ̂* et *χ̂*_{*y*0} = Δ̂ + *ψ̂* + *δ̂.* On peut aussi estimer les variances ${σ}_{x 0}^{2}$ et ${σ}_{y 0}^{2}$, en utilisant les propriétés de propagations des incertitudes à partir des estimées des variances de ${\overline{\overline{\overline{ω}}}}_{x 0} \left({θ}_{1 \left(0\right)}\right)$, ${\overline{\overline{\overline{ω}}}}_{x 0} \left({θ}_{1 \left(0\right)}+φ\right) , {\overline{\overline{\overline{ω}}}}_{y 0} \left({θ}_{1 \left(0\right)}\right) , {\overline{\overline{\overline{ω}}}}_{y 0} \left({θ}_{1 \left(0\right)}+φ\right)$ qui découlent des expressions (10) à (13).

### 2) Seconde sous-procédure : Série d'acquisitions pour θ₂ = π

Les mesures avec *θ*₂ = *π* permettent d'avoir une estimée *χ̂_{xπ}* = Δ̂ - *ψ̂* avec le gyromètre d'axe de mesure *x_{g},* de variance ${σ}_{xπ}^{2}$*,* et permet d'avoir une estimée *χ̂_{yπ}* = Δ̂ - *ψ̂*+*δ* avec le gyromètre d'axe de mesure *y_{g}*, de variance ${σ}_{yπ}^{2}$*.*

Les paramètres *χ̂_{xπ}, χ̂_{yπ}* sont également estimés par une méthode dérivée du « maytagging » à quatre positions. Cette seconde sous-procédure à quatre positions étant similaire à la première sous-procédure, elle n'est pas reprise et détaillée dans cette partie de la description.

Cette seconde sous-procédure permet d'obtenir les moyennes générales des différentielles ${\overline{\overline{\overline{ω}}}}_{xπ} \left({θ}_{1 \left(0\right)}\right) , {\overline{\overline{\overline{ω}}}}_{xπ} \left({θ}_{1 \left(0\right)}+φ\right) , {\overline{\overline{\overline{ω}}}}_{yπ} \left({θ}_{1 \left(0\right)}\right)$ et ${\overline{\overline{\overline{ω}}}}_{yπ} \left({θ}_{1 \left(0\right)}+φ\right)$, où la valeur initiale *θ*₁₍₀₎ et l'angle *φ* (de préférence $- \frac{π}{2}$ ou $\frac{π}{2}$) ne sont pas nécessairement les mêmes que dans la première sous-procédure.

En pratique, la première position pour la seconde sous-procédure (ou seconde séquence principale) peut être dans une position angulaire quelconque par rapport à la première position de la première sous-procédure (ou première séquence principale).

En outre le passage d'une position de plateau à la suivante dans chacune des première et seconde sous-procédures (ou séquences principales) peut se faire dans un sens de rotation ou l'autre du plateau sans que cela n'intervienne dans les résultats de l'estimation, d'où l'indication en valeur absolue des angles de rotation du plateau.

D'après la relation (3), on peut alors écrire ${\overline{\overline{\overline{ω}}}}_{xπ} \left({θ}_{1 \left(0\right)}\right) = \left[-cos\left({θ}_{1 \left(0\right)}\right)cos\left({\hat{χ}}_{xπ}\right)+sin\left({θ}_{1 \left(0\right)}\right)sin\left({\hat{χ}}_{xπ}\right)\right] Ω cosL + {ϵ}_{xπ}$ ${\overline{\overline{\overline{ω}}}}_{xπ} \left({θ}_{1 \left(0\right)}+φ\right) = \left[-cos\left({θ}_{1 \left(0\right)}+φ\right)cos\left({\hat{χ}}_{xπ}\right)+sin\left({θ}_{1 \left(0\right)}+φ\right)sin\left({\hat{χ}}_{xπ}\right)\right] Ω cosL + ϵ {′}_{xπ}$

Et la détermination de *χ̂_{xπ}* se fait par résolution du système linéaire $\left[\begin{matrix}cos \left({\hat{χ}}_{xπ}\right) \\ sin \left({\hat{χ}}_{xπ}\right)\end{matrix}\right] = {\left[\begin{matrix}- cos \left({θ}_{1 \left(0\right)}\right) & sin \left({θ}_{1 \left(0\right)}\right) \\ - cos \left({θ}_{1 \left(0\right)}+φ\right) & sin \left({θ}_{1 \left(0\right)}+φ\right)\end{matrix}\right]}^{- 1} \left[\begin{matrix}{\overline{\overline{\overline{ω}}}}_{xπ} \left({θ}_{1 \left(0\right)}\right) \\ {\overline{\overline{\overline{ω}}}}_{xπ} \left({θ}_{1 \left(0\right)}+φ\right)\end{matrix}\right]$

De même d'après (5) on a ${\overline{\overline{\overline{ω}}}}_{yπ} \left({θ}_{1 \left(0\right)}\right) = \left[cos\left({θ}_{1 \left(0\right)}\right)sin\left({\hat{χ}}_{yπ}\right)+sin\left({θ}_{1 \left(0\right)}\right)cos\left({\hat{χ}}_{yπ}\right)\right] Ω cosL + {ϵ}_{yπ}$ et ${\overline{\overline{\overline{ω}}}}_{yπ} \left({θ}_{1 \left(0\right)}+φ\right) = \left[cos\left({θ}_{1 \left(0\right)}+φ\right)sin\left({\hat{χ}}_{yπ}\right)+sin\left({θ}_{1 \left(0\right)}+φ\right)cos\left({\hat{χ}}_{yπ}\right)\right] Ω cosL + ϵ {′}_{yπ}$

D'où la détermination de *χ̂_{yπ}* par résolution de $\left[\begin{matrix}sin \left({\hat{χ}}_{yπ}\right) \\ cos \left({\hat{χ}}_{yπ}\right)\end{matrix}\right] = {\left[\begin{matrix}cos \left({θ}_{1 \left(0\right)}\right) & sin \left({θ}_{1 \left(0\right)}\right) \\ cos \left({θ}_{1 \left(0\right)}+φ\right) & sin \left({θ}_{1 \left(0\right)}+φ\right)\end{matrix}\right]}^{- 1} \left[\begin{matrix}{\overline{\overline{\overline{ω}}}}_{yπ} \left({θ}_{1 \left(0\right)}\right) \\ {\overline{\overline{\overline{ω}}}}_{yπ} \left({θ}_{1 \left(0\right)}+φ\right)\end{matrix}\right]$

Ainsi à l'issue de la seconde sous procédure on a estimé *χ̂_{xπ}* = Δ̂ - *ψ̂* et *χ̂_{yπ}* = Δ̂ - *ψ̂*+*δ*, avec leurs variances respectives ${σ}_{xπ}^{2} , {σ}_{yπ}^{2}$*.*

### 3) Estimation finale des angles ψ, Δ, δ

Suite aux première et seconde sous-procédures, on déduit le système d'équations $\left(\begin{matrix}+ 1 & 1 & 0 \\ - 1 & 1 & 0 \\ + 1 & 1 & 1 \\ - 1 & 1 & 1\end{matrix}\right) \left(\begin{matrix}\hat{ψ} \\ \hat{Δ} \\ δ\end{matrix}\right) = \left(\begin{matrix}{\hat{χ}}_{x 0} \\ {\hat{χ}}_{xπ} \\ {\hat{χ}}_{y 0} \\ {\hat{χ}}_{yπ}\end{matrix}\right)$

On pose $M = \left(\begin{matrix}+ 1 & 1 & 0 \\ - 1 & 1 & 0 \\ + 1 & 1 & 1 \\ - 1 & 1 & 1\end{matrix}\right)$

Et donc les estimées *ψ*, Δ̂, *δ̂* sont déterminés en utilisant la pseudo-inverse de *M* $\left(\begin{matrix}\hat{ψ} \\ \hat{Δ} \\ δ\end{matrix}\right) = {\left({M}^{T}M\right)}^{- 1} {M}^{T} \left(\begin{matrix}{\hat{χ}}_{x 0} \\ {\hat{χ}}_{xπ} \\ {\hat{χ}}_{y 0} \\ {\hat{χ}}_{yπ}\end{matrix}\right)$

Les incertitudes se déduisent des propriétés de propagation des incertitudes. On montre en particulier que l'on a $var \left(\hat{ψ}\right) = {M}^{+} \left(1,:\right) \left(\begin{matrix}\begin{matrix}{σ}_{x 0}^{2} & 0 \\ 0 & {σ}_{xπ}^{2}\end{matrix} & \begin{matrix}0 & 0 \\ 0 & 0\end{matrix} \\ \begin{matrix}0 & 0 \\ 0 & 0\end{matrix} & \begin{matrix}{σ}_{y 0}^{2} & 0 \\ 0 & {σ}_{yπ}^{2}\end{matrix}\end{matrix}\right) {\left({M}^{+}\left(1,:\right)\right)}^{T}$ où *var*(*ψ̂*) est la variance de l'estimée de l'azimut de la table *ψ̂*.

On peut donc résumer l'ensemble de l'estimation de l'azimut à la mise en œuvre de deux méthodes dérivées du « maytagging » (l'une pour l'orientation du plateau à *θ*₂ = 0, l'autre pour l'orientation *θ*₂ = *π*), chacune à quatre positions (*θ*₁₍₀₎, *θ*₁₍₀₎ + *π*, *θ*₁₍₀₎ + *φ*, *θ*₁₍₀₎ + *φ* + *π* ) du plateau et donc des axes de mesure des gyromètres. A chaque position, une pose est effectuée pendant laquelle des acquisitions de mesures sont effectuées par les gyromètres et sont moyennées. Une fois les mesures moyennées obtenues aux quatre positions, des différentielles des moyennes pour chaque axe de mesure sont calculées, une différentielle par axe. Ceci est effectué pour les deux orientations du plateau. Ces acquisitions de mesures sur les quatre positions pour les deux orientations du plateau et calculs de moyennes sur le temps de pose et de différentielles sont renouvelée N fois et des moyennes générales des différentielles sont finalement calculées. L'azimut étant ensuite estimé par résolution d'un système linéaire comportant les moyennes générales des différentielles.

Les deux sous-procédures peuvent être réalisées séquentiellement, i.e. l'une après l'autre, les *N* fois de la première sous-procédure suivie des *N* fois de la seconde sous-procédure, ou au contraire, alternativement, en effectuant une fois les mesures aux quatre positions en (*θ*₁₍₀₎, *θ*₁₍₀₎ + *π*, *θ*₁₍₀₎ + *φ*, *θ*₁₍₀₎ + *φ* + *π* ) pour *θ*₂ = 0, puis ensuite une fois les mesures aux quatre positions en (*θ*₁₍₀₎, *θ*₁₍₀₎ + *π*, *θ*₁₍₀₎ + *φ*, *θ*₁₍₀₎ + *φ* + *π* ) pour *θ*₂ = *π* puis en revenant à *θ*₂ = 0 et recommençant la séquence *N* fois. Des combinaisons sont possibles entre le séquentiel et l'alternativement.

En fait la seule contrainte, liée au « maytagging », est qu'une pose permettant de déterminer *ω̅*_{*x*0}(*θ*₁₍₀₎) *ω̅*_{*y*0}(*θ*₁₍₀₎) (respectivement *ω̅_{xπ}*(*θ*₁₍₀₎) *ω̅_{yπ}*(*θ*₁₍₀₎) ) soit suivie d'une pose permettant de déterminer *ω̅*_{*x*0}(*θ*₁₍₀₎ + *π*) *ω̅*_{*y*0}(*θ*₁₍₀₎ + *π*) (respectivement *ω̅_{xπ}*(*θ*₁₍₀₎ + *π*) *ω̅_{yπ}*(*θ*₁₍₀₎ + *π*) ).

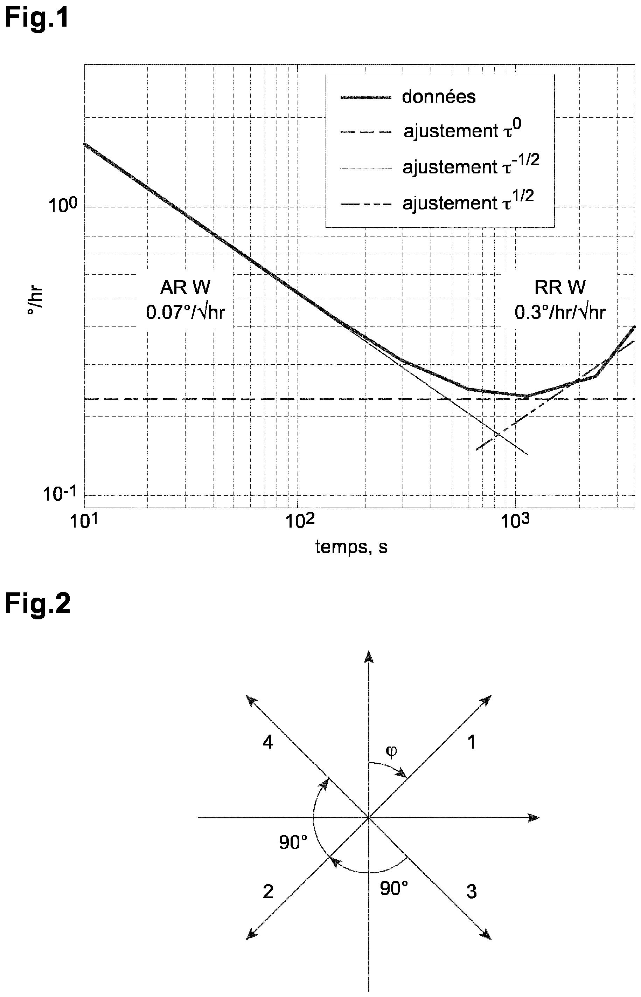

La figure 2 schématise les axes de mesures d'un gyromètre utilisé dans les quatre positions de poses du plateau du simulateur de mouvements avec une numérotation 1, 2, 3, 4 correspondant aux poses successives du plateau, ces axes de mesure étant dans un plan horizontal. Dans la première position, 1, il est indiqué un décalage angulaire par rapport au référentiel.

La procédure présentée jusqu'à présent permet d'obtenir des résultats de qualité pour l'estimation de l'azimut.

Il est cependant possible de mettre en œuvre une procédure quelque peu « dégradée » de l'estimation de l'azimut en utilisant des acquisitions/mesures que d'un seul gyromètre, par exemple un gyromètre d'axe *x_{g}*. Dans ce dernier cas, les sous-procédures mentionnées ci-dessus permettront d'obtenir les estimées *χ̂*_{*x*0} et *χ̂_{xπ},* ce qui permet de déduire *ψ̂* et Δ̂ du fait que dans ce cas la relation (27) se réduit à $\left(\begin{matrix}+ 1 & 1 \\ - 1 & 1\end{matrix}\right) \left(\begin{matrix}\hat{ψ} \\ \hat{Δ}\end{matrix}\right) = \left(\begin{matrix}{\hat{χ}}_{x 0} \\ {\hat{χ}}_{xπ}\end{matrix}\right)$

De même, si le seul gyromètre utilisé pour l'estimation est le gyromètre d'axe y_{g}, la relation (27) se réduit à $\left(\begin{matrix}+ 1 & 1 \\ - 1 & 1\end{matrix}\right) \left(\begin{matrix}\hat{ψ} \\ \hat{Δ} + \hat{δ}\end{matrix}\right) = \left(\begin{matrix}{\hat{χ}}_{y 0} \\ {\hat{χ}}_{yπ}\end{matrix}\right)$

Le fait de n'utiliser qu'un seul gyromètre est considéré comme un mode dégradé car les variances sur les estimées et en particulier sur *ψ̂* seront nécessairement plus élevées que si on utilise les informations issues des deux gyromètres d'axes de mesure *x_{g}* et *y_{g}* (pour une durée globale des mesures identique). Néanmoins, ce mode dégradé peut avoir son utilité si au lieu de faire la présente caractérisation avec une centrale inertielle ou de navigation, on souhaite l'effectuer avec un unique gyromètre.

En tout état de cause, l'objectif est d'obtenir des estimées *ψ̂*, Δ̂*, δ̂* et *χ̂*_{*x*0}, *χ̂*_{*y*0}, et/ou *χ̂_{xπ}*, *χ̂_{yπ}* aussi précises que possibles, pour une durée globale *T* des mesures donnée et correspondant sensiblement à la somme des temps de pose *τ*, une acquisition des mesures des gyromètres prenant un temps de pose *τ* pour être effectuée. En pratique, dans le cadre de la mise en œuvre de l'invention, le temps de positionnement, d'orientation et de stabilisation du plateau est négligeable par rapport au temps de pose *τ* utilisé et on peut considérer que la durée globale des mesures est sensiblement le produit de *N* par *τ*.

Ceci implique que les variances ${σ}_{x 0}^{2} , {σ}_{y 0}^{2} , {σ}_{xπ}^{2} , {σ}_{yπ}^{2}$ doivent être aussi réduites que possible. Ces variances sont dépendantes essentiellement du bruit qui affecte les mesures des gyromètres et du temps de pose des diverses séquences.

Dans ce qui suit l'expression *var*(.) désigne la variance de la quantité entre parenthèse.

La minimisation des incertitudes sur *ψ̂*,Δ,*δ̂* revient *in fine* à minimiser $var \left({\overline{\overline{\overline{ω}}}}_{x 0}\left({θ}_{1 \left(0\right)}\right)\right) , var \left({\overline{\overline{\overline{ω}}}}_{x 0}\left({θ}_{1 \left(0\right)}+φ\right)\right) , var \left({\overline{\overline{\overline{ω}}}}_{y 0}\left({θ}_{1 \left(0\right)}\right)\right) , var \left({\overline{\overline{\overline{ω}}}}_{y 0}\left({θ}_{1 \left(0\right)}+φ\right)\right)$ et $var \left({\overline{\overline{\overline{ω}}}}_{xπ}\left({θ}_{1 \left(0\right)}\right)\right) , var \left({\overline{\overline{\overline{ω}}}}_{xπ}\left({θ}_{1 \left(0\right)}+φ\right)\right) , var \left({\overline{\overline{\overline{ω}}}}_{yπ}\left({θ}_{1 \left(0\right)}\right)\right) , var \left({\overline{\overline{\overline{ω}}}}_{yπ}\left({θ}_{1 \left(0\right)}+φ\right)\right)$*.* Mais compte tenu des relations (10) à (13), on a (en supposant que les réalisations ${\overline{\overline{ω}}}_{x 0}^{\left(i\right)} \left({θ}_{1 \left(0\right)}\right)$ sont indépendantes les unes des autres) : $var \left({\overline{\overline{\overline{ω}}}}_{x 0}\left({θ}_{1 \left(0\right)}\right)\right) = \frac{1}{N} var \left({\overline{\overline{ω}}}_{x 0}^{\left(i\right)}\left({θ}_{1 \left(0\right)}\right)\right)$

Mais du fait de la relation (6) et en supposant que *var* (*ω̅*_{*x*0}(*θ*₁₍₀₎)) = *var* (*ω̅*_{*x*0}(*θ*₁₍₀₎ *+ π*)), et en supposant que les réalisations *ω̅*_{*x*0}(*θ*₁₍₀₎) et *ω̅*_{*x*0}(*θ*₁₍₀₎ + *π*) sont indépendantes, on a : $var \left({\overline{\overline{ω}}}_{x 0}^{\left(i\right)}\left({θ}_{1 \left(0\right)}\right)\right) = \frac{1}{2} var \left({\overline{ω}}_{x 0}\left({θ}_{1 \left(0\right)}\right)\right)$

Dans l'hypothèse idéalisée où les séquences {*dₓ*(*t*)}, {*d_{y}*(*t*)} seraient des séquences de bruits blancs, de variance ${η}_{0}^{2}$, on aurait $var \left({\overline{ω}}_{x 0}\left({θ}_{1 \left(0\right)}\right)\right) = \frac{1}{τ} {η}_{0}^{2}$ et donc du fait de la relation (33), on aurait $var \left({\overline{\overline{ω}}}_{x 0}^{\left(i\right)}\left({θ}_{1 \left(0\right)}\right)\right) = \frac{1}{2 τ} {η}_{0}^{2}$, et du fait de de la relation (31), on aurait $var \left({\overline{\overline{\overline{ω}}}}_{x 0}\left({θ}_{1 \left(0\right)}\right)\right) = \frac{1}{2 Nτ} {η}_{0}^{2}$. On remarque alors que le terme *T =* 2*Nτ* correspond au temps total passé sur les poses aux positions *θ*₁₍₀₎ et *θ*₁₍₀₎ + *π* pour une position *θ*₂ de l'axe 2 donnée (0 *ou* π).

Ainsi dans l'hypothèse où les bruits des gyromètres seraient blancs $var \left({\overline{\overline{\overline{ω}}}}_{x 0}\left({θ}_{1 \left(0\right)}\right)\right)$ ne dépendrait seulement que du produit *T = 2Nτ*, peu importe alors pour un *T* donné les valeurs de *N* et *τ*.

Cette hypothèse idéalisée d'un bruit blanc des gyromètres se traduirait sur la courbe d'Allan (écart type en fonction d'un temps d'intégration du bruit) par une pente $- \frac{1}{2}$ (on peut sur ce point se rapporter à l'ouvrage d'Hervé Lefèvre « The fiber optic gyroscope, 3rd edition » Artech House Publishers (2022), section 2.3), qui correspond à une marche au hasard en position (« angular random walk » en Anglais). Ce temps d'intégration du bruit correspond à la durée de la mesure.

Un exemple de courbe d'Allan d'un gyromètre est représenté sur la figure 1 et on y note un minimum dans l'évolution de l'écart type des mesures en fonction de la durée de la mesure, ce minimum qui correspond à l'« instabilité de biais » du gyromètre, correspond à une durée de mesure qui est le « temps de corrélation de la courbe d'Allan ».

Dans les faits, le bruit des gyromètres n'est jamais blanc, et on observe une remontée de la courbe d'Allan pour de longs temps d'intégration correspondant à une pente $+ \frac{1}{2}$ signant la présence d'une marche au hasard en vitesse (rate random walk en Anglais). Le minimum de la courbe d'Allan (situé entre les pentes $- \frac{1}{2}$ et $+ \frac{1}{2}$) est conventionnellement nommé « l'instabilité de biais ».

Dans le cadre du « maytagging », l'état de l'art actuel (voir par exemple l'article, I.P. Prikhodko, S.A. Lotov, A.A. Trusov, A.M. Shkel « What is MEMS Gyrocompassing ? Comparative Analysis of Maytagging and Carouseling », IEEE Journal of Micromechanical systems (2013)) prescrit que le temps 2*τ* soit égal au temps d'intégration dans la courbe d'Allan pour lequel « l'instabilité de biais » (minimum de la courbe d'Allan) est atteint, ce temps étant dénommé temps de corrélation (« correlation time » en Anglais, cf. l'ouvrage d'Hervé Lefèvre précité).

Dans le cadre de la présente description ce temps de corrélation est dénommé « temps de corrélation de la courbe d'Allan ».

L'inventeur a déterminé dans le cadre de la procédure dérivée du « maytagging » mise en œuvre dans l'invention et du fait que le bruit des gyromètres n'est pas seulement blanc, que pour une durée globale *T* des mesures, l'optimal du temps de pose *τ* est significativement plus faible que le temps de corrélation de la courbe d'Allan. Ainsi, on propose de prendre un temps de pose *τ* significativement inférieur au temps de corrélation de la courbe d'Allan des gyromètres et, en conséquence, d'augmenter *N*, le nombre d'itérations (cf équations (10) à (13). Avantageusement, on met en œuvre un temps de pose *τ* inférieur ou égal au dixième du temps de corrélation de la courbe d'Allan des gyromètres.

On explique cela par la fréquence plus rapide des mesures du fait d'un temps de pose *τ* petit qui opère une sorte de filtrage « coupe-bas » sur le bruit.

On propose donc d'utiliser un temps de pose *τ* le plus faible possible pour un nombre *N* d'itérations tels que la durée globale des mesures soit inférieure à la durée globale *T* des mesures sans itération et avec un temps de pose *τ* égal au temps de corrélation de la courbe d'Allan.

Par exemple, on peut calculer une durée globale maximum *Tmax* des mesures égale à la durée globale des mesures avec mise en œuvre de l'invention mais sans itération, *N* = 1, et avec un temps de pose *τ* égal au temps de corrélation de la courbe d'Allan. On détermine alors des solutions avantageuses de couples de temps de pose *τ* inférieurs au temps de corrélation de la courbe d'Allan et *N* >1 permettant d'avoir une durée globale des mesures *T* inférieure à la durée globale maximum *Tmax.*

En pratique, on peut montrer que choisir une valeur du temps de pose *τ* inférieure d'un ordre de grandeur, typiquement au dixième ou au vingtième, du temps de corrélation de la courbe d'Allan, permet de s'affranchir en grande partie de l'effet « marche au hasard en vitesse » du bruit des gyromètres tout en réduisant la durée globale *T* des mesures par rapport à celle sans itération (*N* = 1) et avec un temps de pose *τ* égal au temps de corrélation de la courbe d'Allan.

Le procédé de l'invention est donc bien plus efficace que la méthode connue sans itération et utilisant un temps de pose τ égal au temps de corrélation de la courbe d'Allan, et cela pour un résultat de qualité.

Finalement, une fois que l'azimut de la base de la table, *ψ̂*, a été déterminé, on place sur la base du simulateur de mouvements un ou des miroirs, et on fait effectuer à la base dudit simulateur de mouvement des rotations par des actions/manœuvres mécaniques afin de compenser l'angle *ψ̂*, ces rotations étant contrôlées au moyen d'un auto-collimateur visant les miroirs précités. Cette compensation de l'angle *ψ̂* peut utiliser d'autres moyens connus que les miroirs.

Une fois que la compensation a été obtenue par la rotation de la base du simulateur de mouvements, on fixe cette base d'une manière rigide afin que le simulateur de mouvements ne puisse plus bouger par rapport à la terre. On comprend que le support sur lequel est fixé la base ne doit pas non plus bouger par rapport à la terre. Dans une variante de mise en œuvre où l'on ne souhaite pas bouger la base du simulateur de mouvements ou qu'il n'est pas possible de la bouger, l'estimation de l'azimut obtenue est stockée en mémoire d'un équipement informatique qui servira à corriger les mesures des appareils testés dans le simulateur de mouvements.

On comprend que l'invention peut s'appliquer dans d'autres configurations dans lesquelles l'axe externe effectue une rotation suivant l'axe *yₛ*, et l'axe interne une rotation suivant un axe *z*₂. Il en est de même dans le cas où l'axe externe effectuerait une rotation suivant l'axe zₛ et où l'axe interne effectuerait une rotation suivant l'axe *x₂* ou *y*₂. Dans tous les cas, le procédé utiliserait un ou deux axes de mesure horizontaux avec des mesures dans les quatre positions décrites et pour les deux orientations opposées selon la verticale du plateau.

## Revendications

1. Procédé d'estimation de l'azimut, *ψ̂*, d'une base d'un simulateur de mouvements comportant un plateau monté sur la base pour tourner autour d'au moins deux axes perpendiculaires entre eux, le plateau ayant une face de référence plane définissant un plan de plateau, dans lequel
on fixe sur la face de référence du plateau un système gyrométrique comportant au moins un gyromètre adapté à mesurer une vitesse angulaire de rotation du plateau autour de son axe de mesure dans un référentiel inertiel,
on effectue au moins quatre sessions de mesures de la vitesse angulaire de rotation du plateau au cours d'au moins quatre poses du plateau dans quatre positions différentes du plateau lors d'une première séquence principale et dans quatre positions de plateau lors d'une seconde séquence principale, le plateau étant statique pendant ses poses et l'axe de mesure du gyromètre étant horizontal pendant les poses du plateau,
dans la première séquence principale, le plateau est positionné afin que, lors des poses du plateau, la face de référence soit orientée suivant un premier vecteur normal, et on effectue successivement les mesures dans les quatre positions de pose successives du plateau,
dans la seconde séquence principale, le plateau est positionné afin que lors des poses du plateau, la face de référence soit orientée suivant un second vecteur normal opposé au premier vecteur normal, et on effectue successivement les sessions de mesures dans les quatre positions de pose successives du plateau,
les quatre positions de plateau de chacune des première et seconde séquences principales étant telles que l'axe de mesure horizontal du gyromètre est tourné d'un angle de 180° en valeur absolue entre une première position et une deuxième position, est tourné d'un angle de 90° en valeur absolue entre la deuxième position et une troisième position, est tourné d'un angle de 180° en valeur absolue entre la troisième position et une quatrième position,
les sessions de mesures pendant chacune des poses du plateau à chacune des quatre positions de plateau étant effectuées pendant sensiblement un même temps de pose *τ* déterminé inférieur ou égal à la moitié du temps de corrélation de la courbe d'Allan du gyromètre, ledit temps de corrélation étant la durée de mesure qui correspond au minimum de l'écart-type sur la courbe d'Allan correspondant à l'instabilité de biais, et on moyenne les mesures obtenues pendant ce temps de pose pour obtenir une mesure de session moyennée,
dans chacune des première et seconde séquences principales, on calcule deux différentielles des mesures de session moyennées, dont une première différentielle entre la mesure de session moyennée à la première position et la mesure de session moyennée à la deuxième position et une seconde différentielle entre la mesure de session moyennée à la troisième position et la mesure de session moyennée à la quatrième position,
on répète un nombre *N* déterminé de fois chacune des première et seconde séquences principales, *N* >1, et on calcule des moyennes générales des différentielles obtenues par la répétition des première et seconde séquences principales, l'azimut étant finalement estimé par résolution d'un système linéaire comportant les moyennes générales des différentielles.

2. Procédé d'estimation selon la revendication 1, dans lequel le temps de pose est inférieur ou égal au dixième du temps de corrélation de la courbe d'Allan.

3. Procédé d'estimation selon la revendication 2, dans lequel le temps de pose est inférieur ou égal au vingtième du temps de corrélation de la courbe d'Allan.

4. Procédé d'estimation selon l'une quelconque des revendications 1 à 3, dans lequel un seul gyromètre est mis en œuvre.

5. Procédé d'estimation selon l'une quelconque des revendications 1 à 3, dans lequel on met en œuvre un ensemble de trois gyromètres ayant leurs axes de mesure perpendiculaires entre eux, l'ensemble de trois gyromètres étant une centrale inertielle ou de navigation et les trois gyromètres ont des temps de corrélation de la courbe d'Allan sensiblement identiques, les sessions de mesures étant effectuées pendant les poses du plateau par deux mêmes gyromètres qui ont leurs deux axes de mesure horizontaux pendant toutes les poses du plateau.

6. Procédé d'estimation selon l'une quelconque des revendications 1 à 3, dans lequel on met en œuvre deux gyromètres ayant leurs axes de mesure perpendiculaires entre eux, les deux gyromètres étant fixés sur le plateau de manière que leurs axes de mesure soient horizontaux lors des poses du plateau et les deux gyromètres ont des temps de corrélation de la courbe d'Allan sensiblement identiques.

7. Procédé d'estimation selon la revendication 1, dans lequel on met en œuvre au moins deux gyromètres et dans lequel les gyromètres utilisés pour les sessions de mesures lors des poses ont des temps de corrélation de la courbe d'Allan significativement différents entre eux, et on met en œuvre un temps de pose *τ* inférieur ou égal à la moitié de la valeur minimale des temps de corrélation de la courbe d'Allan des gyromètres utilisés.

8. Procédé d'estimation selon l'une quelconque des revendications 1 à 7, dans lequel, les première et seconde séquences principales sont répétées *N* fois séquentiellement, la première séquence principale étant répétée *N* fois puis la seconde séquence étant répétée *N* fois.

9. Procédé d'estimation selon l'une quelconque des revendications 1 à 7, dans lequel, les première et seconde séquences principales sont répétées *N* fois alternativement, par *N* répétitions d'une première séquence principale exécutée une fois suivie d'une seconde séquence exécutée une fois.

10. Procédé d'estimation selon l'une quelconque des revendications 1 à 7, dans lequel, les première et seconde séquences principales sont répétées *N* fois alternativement et séquentiellement en répétant *l* fois une première séquence principale exécutée *m* fois suivie d'une seconde séquence exécutée *m* fois, avec *m* < *N, l* > 1 et avec le produit de *l* par *m* égal à *N.*

11. Procédé d'estimation selon l'une quelconque des revendications 1 à 10, dans lequel une fois que l'azimut de la base de la table, *ψ̂*, a été déterminé et pour une mise au nord de la base, on place sur la base du simulateur de mouvements au moins un miroir et on fait effectuer à la base dudit simulateur des rotations mécaniques afin de compenser l'angle *ψ̂*, lesdites rotations mécaniques étant contrôlées au moyen d'un auto-collimateur visant les miroirs précités.

## Patentansprüche

1. Verfahren zur Schätzung des Azimuts, *ψ̂*, einer Basis eines Bewegungssimulators mit einer Platte, die auf der Basis montiert ist, um sich um mindestens zwei zueinander senkrechte Achsen zu drehen, wobei die Platte eine ebene Bezugsseite hat, die eine Plattenebene definiert, bei dem
man auf der Bezugsseite der Platte ein gyrometrisches System befestigt, das mindestens einen Kreisel aufweist, der geeignet ist, in einem Trägheitsbezugsrahmen eine Drehwinkelgeschwindigkeit der Platte um deren Meßachse zu messen,
man mindestens vier Meßdurchgänge der Drehwinkelgeschwindigkeit der Platte in einer Folge von mindestens vier Stellungen der Platte in vier verschiedenen Positionen der Platte während eines ersten Hauptablaufs und in vier Positionen der Platte während eines zweiten Hauptablaufs durchführt, wobei die Platte in ihren Stellungen unbewegt bleibt und die Meßachse des Kreisels bei den Stellungen der Platte horizontal ist,
die Platte während des ersten Hauptablaufs so positioniert ist, daß die Bezugsseite der Platte bei den Stellungen der Platte gemäß eines ersten Normalvektors orientiert ist, und man nacheinander die Messungen in den vier aufeinanderfolgenden Stellungspositionen der Platte durchführt,
die Platte während des zweiten Hauptablaufs so positioniert ist, daß die Bezugsseite der Platte bei den Stellungen der Platte gemäß eines zum ersten Normalvektor entgegengesetzten zweiten Normalvektors orientiert ist, und man nacheinander die Messungen in den vier aufeinanderfolgenden Stellungspositionen der Platte durchführt,
wobei die jeweiligen vier Positionen der Platte des ersten und des zweiten Hauptablaufs so sind, daß die horizontale Meßachse des Kreisels um einen Winkel von 180° als absoluten Wert zwischen einer ersten Position und einer zweiten Position gedreht wird, um einen Winkel von 90° als absoluten Wert zwischen der zweiten Position und einer dritten Position gedreht wird, um einen Winkel von 180° als absoluten Wert zwischen der dritten Position und einer vierten Position gedreht wird,
wobei die Meßabläufe bei jeder der Stellungen der Platte in jeder der vier Positionen der Platte während ungefähr einer selben Stellungsdauer τ durchgeführt werden, die als kleiner als oder gleich der halben Korrelationszeit der Allan-Kurve des Kreisels bestimmt wird, wobei die Korrelationsdauer die Meßdauer ist, die mindestens der der Schrägunstabilität entsprechenden Standardabweichung auf der Allan-Kurve entspricht, und man die während der Stellungszeit erhaltenen Messungen mittelt, um eine mittlere Ablaufmessung zu erhalten,
sowohl beim ersten als auch beim zweiten Hauptablauf werden zwei Differenzen der gemittelten Messungen berechnet, wovon eine eine erste Differenz zwischen der gemittelten Ablaufmessung in der ersten Position und der gemittelten Ablaufmessung in der zweiten Position ist und die andere eine zweite Differenz zwischen der gemittelten Ablaufmessung in der dritten Position und der gemittelten Ablaufmessung in der vierten Position ist,
man wiederholt eine Anzahl *N* mal sowohl den ersten als auch den zweiten Hauptablauf, mit *N* > 1, und man berechnet die allgemeinen Mittelwerte der erhaltenen Differenzen durch die Wiederholung des ersten und des zweiten Hauptablaufs, wobei der Azimut am Ende durch Lösung eines linearen Systems geschätzt wird, das die allgemeinen Mittelwerte der Differenzen aufweist.

2. Schätzverfahren gemäß Anspruch 1, bei dem die Stellungsdauer kleiner als oder gleich einem Zehntel der Korrelationsdauer der Allan-Kurve ist.

3. Schätzverfahren gemäß Anspruch 2, bei dem die Stellungsdauer kleiner als oder gleich einem Zwanzigstel der Korrelationsdauer der Allan-Kurve ist.

4. Schätzverfahren gemäß einem der Ansprüche 1 bis 3, bei dem ein einziger Kreisel eingesetzt wird.

5. Schätzverfahren gemäß einem der Ansprüche 1 bis 3, bei dem man eine Gesamtheit von drei Kreiseln einsetzt, deren Meßachsen zueinander senkrecht sind, wobei die Gesamtheit der drei Kreisel eine Trägheits- oder Navigationszentrale ist und die drei Kreisel im Wesentlichen identische Korrelationsdauern der Allan-Kurve haben, wobei die Meßabläufe während der Stellungen der Platte durch zwei gleiche Kreisel erfolgen, deren beide Meßachsen bei allen Stellungen der Platte horizontal sind.

6. Schätzverfahren gemäß einem der Ansprüche 1 bis 3, bei dem man zwei Kreisel einsetzt, deren Meßachsen zueinander senkrecht sind, wobei die beiden Kreisel auf der Platte so befestigt sind, daß deren Meßachsen bei den Stellungen der Platte horizontal sind, und die beiden Kreisel im Wesentlichen identische Korrelationsdauern der Allan-Kurve haben.

7. Schätzverfahren gemäß Anspruch 1, bei dem man mindestens zwei Kreisel verwendet und bei dem die für die Meßabläufe bei den Stellungen eingesetzten Kreisel sehr voneinander unterschiedliche Korrelationsdauern der Allan-Kurve haben und eine Stellungsdauer τ von kleiner als oder gleich der Hälfte des Minimalwerts der Korrelationsdauern der Allan-Kurve der eingesetzten Kreisel durchgeführt wird.

8. Schätzverfahren gemäß einem der Ansprüche 1 bis 7, bei dem der erste Hauptablauf und der zweite Hauptablauf N-mal nacheinander wiederholt werden, wobei der erste Hauptablauf *N*-mal wiederholt wird und dann der zweite Hauptablauf *N*-mal wiederholt wird.

9. Schätzverfahren gemäß einem der Ansprüche 1 bis 7, bei dem der erste Hauptablauf und der zweite Hauptablauf *N*-mal abwechselnd durch *N* Wiederholungen eines einmal durchgeführten ersten Hauptablaufs, gefolgt von einem einmal durchgeführten zweiten Ablauf, wiederholt werden.

10. Schätzverfahren gemäß einem der Ansprüche 1 bis 7, bei dem der erste und der zweite Hauptablauf N-mal abwechselnd und aufeinanderfolgend wiederholt werden, indem ein *m*-mal durchgeführter erster Hauptablauf *I*-mal wiederholt wird, gefolgt von einem *m*-mal durchgeführten zweiten Hauptablauf, wobei *m* < *N*, *I* > 1 und das Produkt aus *I* und *m* gleich *N* ist.

11. Schätzverfahren gemäß einem der Ansprüche 1 bis 10, bei dem man dann, wenn der Azimut, *ψ̂*, der Basis des Tischs bestimmt ist, und für eine Einstellung der Basis auf Nord auf die Basis des Bewegungssimulators mindestens einen Spiegel setzt und man die Basis des Simulators in mechanische Drehungen versetzt, um den Winkel , $\hat{ψ}$, zu kompensieren, wobei die mechanischen Drehungen mittels eines die vorgenannten Spiegel anvisierenden Autokollimators gesteuert werden.

## Claims

1. A method for estimating the azimuth, *ψ̂*, of a motion simulator base including a plate mounted on the base to rotate about at least two mutually perpendicular axes, the plate having a flat reference face defining a plate plane, in which
a gyrometric system including at least one gyrometer adapted to measure an angular speed of rotation of the plate about its measurement axis in an inertial reference frame is attached to the reference face of the plate,
at least four sessions of measurement of the angular speed of rotation of the plate are performed during at least four poses of the plate in four different positions of the plate during a first main sequence and in four positions of the plate during a second main sequence, the plate being static during its poses and the measurement axis of the gyrometer being horizontal during the poses of the plate,
in the first main sequence, the plate is positioned so that, during the plate poses, the reference face is directed according to a first normal vector and the measurements are performed successively in the four successive plate pose positions,
in the second main sequence, the plate is positioned so that, during the plate poses, the reference face is oriented according to a second normal vector, opposite to the first normal vector, and the measurement sessions are performed successively in the four successive plate pose positions,
the four plate positions of each of the first and second main sequences being such that the horizontal measurement axis of the gyrometer is turned by an angle of 180° in absolute value between a first position and a second position, is turned by an angle of 90° in absolute value between the second position and a third position, is turned by an angle of 180° in absolute value between the third position and a fourth position,
the measurement sessions between each of the plate poses at each of the four plate positions being performed during substantially a same determined pose time τ less than or equal to half the gyrometer's Allan curve correlation time, said correlation time being the measurement duration that corresponds to the minimum of the standard deviation on the Allan curve corresponding to the bias instability, and the obtained measurements are averaged over this pose time to obtain an averaged session measurement,
in each of the first and second main sequences, two differentials of the averaged session measurements are calculated, including a first differential between the session measurement averaged at the first position and the session measurement averaged at the second position and a second differential between the session measurement averaged at the third position and the session measurement averaged at the fourth position,
each of the first and second main sequences is repeated a determined number of times *N, N* >1, and general averages of the differentials obtained by the repetition of the first and second main sequences are calculated, the azimuth being finally estimated by solving a linear system including the general averages of the differentials.

2. The estimation method according to claim 1, wherein the pose time is less than or equal to one-tenth of the Allan curve correlation time.

3. The estimation method according to claim 2, wherein the pose time is less than or equal to one-twentieth of the Allan curve correlation time.

4. The estimation method according to any one of claims 1 to 3, wherein a single gyrometer is implemented.

5. The estimation method according to any one of claims 1 to 3, wherein a set of three gyrometers having their measurement axes mutually perpendicular is implemented, the set of three gyrometers being an inertial or navigation unit and the three gyrometers having substantially identical Allan curve correlation times, the measurement sessions being performed during the plate poses by two same gyrometers that have their two measurement axes horizontal during all the plate poses.

6. The estimation method according to any one of claims 1 to 3, wherein two gyrometers having their measurement axes mutually perpendicular are implemented, the two gyrometers being attached to the plate in such a way that their measurement axes are horizontal during the plate poses and the two gyrometers have substantially identical Allan curve correlation times.

7. The estimation method according to claim 1, wherein at least two gyrometers are implemented, and wherein the gyrometers used for the measurement sessions during the poses have Allan curve correlation times that are significantly different from each other, and a pose time *τ* is implemented, which is less than or equal to half the minimum value of the Allan curve correlation times of the gyrometers used.

8. The estimation method according to any one of claims 1 to 7, wherein the first and second main sequences are repeated *N* times sequentially, the first main sequence being repeated *N* times, then the second sequence repeated *N* times.

9. The estimation method according to any one of claims 1 to 7, wherein the first and second main sequences are repeated *N* times alternately, by *N* repetitions of a first main sequence executed once, followed by a second sequence executed once.

10. The estimation method according to any one of claims 1 to 7, wherein the first and second main sequences are repeated *N* times alternately and sequentially by repeating *l* times a first main sequence executed *m* times, followed by a second sequence executed *m* times, with *m < N, l >* 1 and with the product of *l* by *m* equal *to N.*

11. The estimation method according to any one of claims 1 to 10, wherein once the azimuth of the table base, *ψ̂*, has been determined and for a setting of the base to north, at least one mirror is placed on the base of the motion simulator and the base of said simulator is caused to perform mechanical rotations in order to compensate for the angle *ψ̂*, said mechanical rotations being controlled by means of an autocollimator targeting the above-mentioned mirrors.
